Europäisches Patentamt

European Patent Office

Office européen des brevets

(19)

(11) **EP 0 773 501 B1**

(12) **EUROPÄISCHE PATENTSCHRIFT**

(45) Veröffentlichungstag und Bekanntmachung des Hinweises auf die Patenterteilung:
**12.06.2002   Patentblatt 2002/24**

(51) Int Cl.$^7$: **G06F 15/18**

(21) Anmeldenummer: **96118120.3**

(22) Anmeldetag: **12.11.1996**

(54) **Verfahren zur Gewinnung des Wertes mindestens einer nichtgemessenen Systemgrösse eines dynamischen Systems**

Method for acquiring the value of a non-measured parameter of a dynamic system

Méthode d'acquisition de la valeur d'un paramètre non-mesuré dans une système dynamique

(84) Benannte Vertragsstaaten:
**DE DK FR GB NL**

(30) Priorität: **13.11.1995  DE 19542261**

(43) Veröffentlichungstag der Anmeldung:
**14.05.1997   Patentblatt 1997/20**

(73) Patentinhaber: **Schenck Vibro GmbH**
**64293 Darmstadt (DE)**

(72) Erfinder: **Zöller, Rolf**
**64293 Darmstadt (DE)**

(74) Vertreter: **Behrens, Helmut, Dipl.-Ing.**
**Gross-Gerauer Weg 55**
**64295 Darmstadt (DE)**

(56) Entgegenhaltungen:
**WO-A-92/16897**

**Beschreibung**

Die Erfindung bezieht sich auf ein Verfahren zur Gewinnung des Wertes mindestens einer nichtgemessenen Systemgröße eines dynamischen, insbesondere nichtlinearen Systems. Bei komplexen dynamischen Systemen sind interessierende physikalische Größen of nicht oder mit sehr hohem meßtechnischen Aufwand direkt meßbar. So müssen beispielsweise Meßeinrichtungen für die Maschinenüberwachung mit einer sehr großen Anzahl von Meßkanälen ausgestattet sein, um eine ausreichende Erfassung von Betriebszuständen sicherzustellen. Bei der Ermittlung von meßtechnisch schwer zugänglichen Systemgrößen, wie beispielsweise Drehmomenten an rotierenden Maschinenwellen kommt zu dem Problem der hohen Anzahl von Meßwertaufnehmern noch der hohe apparative Aufwand als solcher hinzu.

Die WO 92/16897 offenbart ein Verfahren zur Analyse eines dynamischen, nichtlinearen Systems, demgemäß eine Zeitreihe einer Meßgröße erfaßt wird, wobei diese Meßgröße entsprechend dem Takens-Verfahren in einen rekonstruierten Phasenraum abgebildet wird. In einem weiteren Schritt wird aus Zeitreihe und Phasenraum in einer Trainingsphase ein mathematisches Modell abgeleitet und auf der Basis dieses mathematischen Modells die Phasenraumtrajektorie extrapoliert. Hieraus können Voraussagen über das zukünftige Verhalten des dynamischen Systems gemacht werden.

Der Erfindung liegt die Aufgabe zugrunde, ein Verfahren vorzuschlagen, welches die Ermittlung von Zustandsgrößen komplexer dynamischer Systeme, insbesondere nichtlinearer Systeme, mit besonders geringem meßtechnischen Aufwand ermöglicht. Dies soll zum einen eine deutliche Verringerung der Anzahl der benötigten Meßwertaufnehmer ermöglichen und es sollen darüber hinaus auch nicht direkt meßbare Größen ermittelbar sein.

Diese Aufgabe wird erfindungsgemäß durch die kennzeichnenden Merkmale des Patentanspruchs 1 gelöst.

Die Erfindung nutzt die Erkenntnis, daß es mit Methoden der nichtlinearen Dynamik möglich ist, mehrere physikalische Größen aus einer gemessenen Zeitreihe zu rekonstruieren, wenn in dieser Zeitreihe die Systemdynamik ausreichend repräsentiert ist. Hierdurch kann auf ein systembeschreibendes mathematisches Modell verzichtet werden. Gemäß der Erfindung wird also eine Trainingsdatenbasis zunächst im Phasenraum erstellt und anschließend nach der Time-delay-Technik nach Takens im rekonstruierten Phasenraum abgebildet ( Takens, F. Detecting strange attractors in turbulence. In: Dynamical Systems and Turbulence, Springer Verlag, Berlin, 1981, S. 366-381).

Während der Phasenraum durch verschiedene Größen aufgespannt ist, die den Systemzustand kennzeichnen, ist der rekonstruierte Phasenraum die Darstellung von der Meßgröße P (P: eine beliebige Komponente des Systemzustandes) in Abhängigkeit von $P_T$, das ist der Wert der Meßgröße P zu einem um ein definiertes Maß verschobenen Zeitpunkt. Einen höherdimensionalen rekonstruierten Phasenraum erhält man durch Einführung weiterer Achsen $P_{2T}$, $P_{3T}$, usw. Die in der Meßphase ermittelte Meßgröße wird nun ebenfalls im rekonstruierten Phasenraum dargestellt. Da diese Darstellung die gesamte benötigte Systemdynamik enthält, kann nach Inter- bzw. Extrapolation im rekonstruierten Phasenraum die gesuchte Systemgröße aus der Trainingsdatenbasis bestimmt werden.

Bei einer bevorzugten Ausführungsform der Erfindung ist vorgesehen, daß die Inter- bzw. Extrapolation mittels aller nächsten trainierten Nachbardynamiken erfolgt. Dieses Verfahren ist mit einem relativ geringen Rechenaufwand verbunden und liefert zumindest für feste Systemparameter sehr gute Ergebnisse.

Eine andere Weiterbildung der Erfindung sieht vor, daß die trainierten Dynamiken über Zugehörigkeitsfunktionen in Bezug auf die gemessene Dynamik gewichtet werde, und daß die Interoder Extrapolationen mittels dieser gewichteten Dynamiken erfolgen. Dabei werden gemäß der Methoden der Fuzzy-Logik den trainierten Dynamiken Werte zwischen 0 und 1 zugeordnet, die angeben, wie ähnlich eine gemessene Dynamik einem Trainingsdatensatz ist. Dadurch läßt sich die Schätzgenauigkeit und insbesondere Extrapolationsergebnisse deutlich verbessern. Diese Ausführungsform der Erfindung arbeitet auch bei einer weiten Parametervariation sehr genau.

Die Erfindung wird im folgenden anhand eines Anwendungsbeispiels näher dargestellt. Hierzu zeigt Fig. 1 Zustandsräume im Trainings- und Rekonstruktionsmodus, Fig. 2 einen Meßaufbau und Fig. 3 eine Darstellung von mit dem erfindungsgemäßen Verfahren bestimmten Werten und ihre Fehlerabweichung. Fig. 4 zeigt die gemessenen Wellenbahnen der Trainingsdatenbasis und in Fig. 5 ist die Phasenraumrekonstruktion der $X_1$-Koordinate von den Wellenbahnen aus der Trainingsdatenbasis dargestellt.

Ein dynamisches, insbesondere nichtlineares System sei definiert durch die Gleichung

$$\dot{x}=F_{\mu}(x)$$

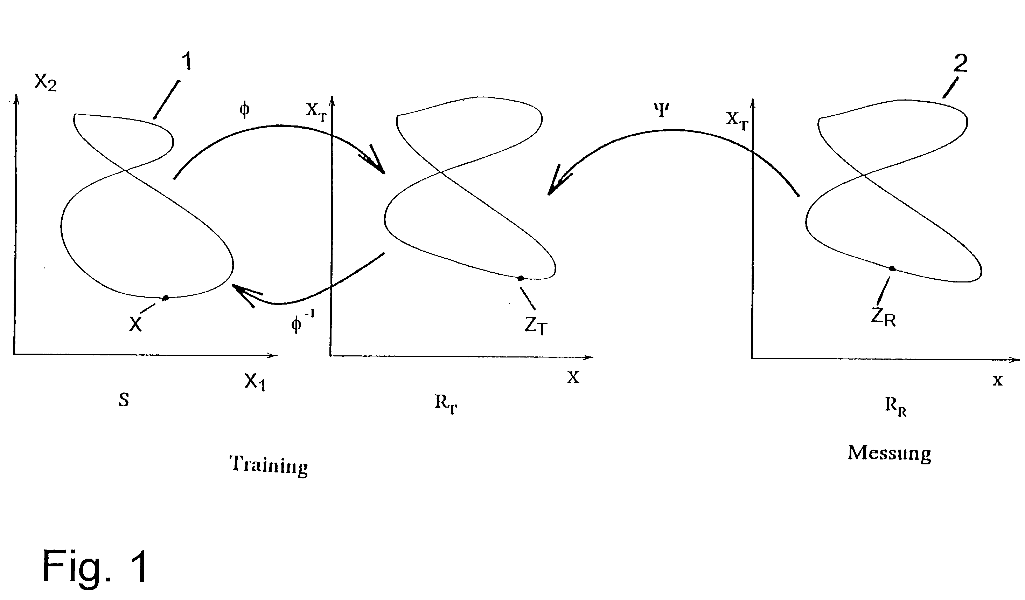

wobei X = $(X_1, X_2, ..., X_d)$ den Systemzustand als Punkt im Phasenraum S repräsentiert. Das Vektorfeld F ist dabei abhängig von den Systemparametern μ. Die Lösung der oben genannten Gleichung ergibt die Trajektorie. Sie beschreibt die zeitliche Evolution der Zustände X und damit die Bahn im Phasenraum, die von X durchlaufen wird. Eine Trajektorie wird auch Orbit genannt. In Fig. 1 ist eine Trajektorie 1 im d = 2-dimensionalen Phasenraum S dargestellt, der durch die Systemgrößen $X_1$ und $X_2$ aufgespannt wird.

Das Ausführungsbeispiel bezieht sich auf eine Anwendung des erfindungsgemäßen Verfahrens auf die Ermittlung von Wellenbahnen rotierender Maschinen, wobei eine zweidimensionale Bewegung durch Messung nur einer einzigen Koordinate, beispielsweise der Horizontalbewegung, ermittelt wird.

In der Trainingsphase werden bei unterschiedlichen Parametereinstellungen die Koordinaten $X_1$ und $X_2$ gemessen und als Orbit im Phasenraum S dargestellt. Anschließend wird aus einer Meßgröße, in diesem Fall der Horizontalkoordinate $X_1$, eine Phasenraumrekonstruktion nach der Time-delay-Technik (Takens) abgeleitet. Die Problemstellung der Phasenraumrekonstruktion besteht in der Rückgewinnung der Systemzustände X aus der Information, die in der Zeitreihe $X_1$ enthalten ist. Obwohl im allgemeinen das Vektorfeld $F_\mu$ unbekannt ist, gibt es die Möglichkeit, einen Zustandsraum zu rekonstruieren, der in gewissen Sinn äquivalent zum d-dimensionalen Originalphasenraum ist. Dieser rekonstruierte Raum wird im folgenden Rekonstruktionsraum genannt. Die Zustandsraumrekonstruktion wurde von Takens 1981 eingeführt. Er betrachtete die Menge der Time-Delay-Vektoren $Z_T$ (t).

Ein Punkt im rekonstruierten Phasenraum $R_T$ ergibt sich gemäß der Gleichung

$$z_T(t) = (x_1(t), x_1(t - T), x_1(t - 2T), ..., x_1(t - (m - 1)T) \in \mathrm{R}_T$$

mit m potentiellen Freiheitsgraden. Bei geeigneter Wahl von Einbettungsdimension m und Verzögerungszeit (Einbettungszeit) T ist die Abbildung zwischen tatsächlicher und rekonstruierter Dynamik umkehrbar ( $\phi$; $\phi^{-1}$ ). In Fig. 1 sind diese Funktionen als Übergang vom Rekonstruktionsraum $R_T$, dem Raum der Zustände $Z_T$ in den Zustandsraum S ($\phi^{-1}$) und umgekehrt ($\phi$) dargestellt.

Durch Abtastung und Ablage des Variablenpaares $(X_1, X_2)$ und Bildung des daraus folgenden rekonstruierten Zustands $Z_T$ erhält man $\phi^{-1}$ als Punktabbildung für jeden Abtastwert der Trainingsphase.

Die Trainingsdatenbasis ergibt sich also durch Ablage der Orbits bei verschiedenen Parametereinstellungen im Phasenraum S und der Darstellung dieser Orbits im rekonstruierten Phasenraum $R_T$. Nach Abschluß der Trainingsphase wird nur noch die Meßgröße (Horizontalkoordinate $X_1$) gemessen und die Systemgröße (Vertikalkoordinate $X_2$) wird mit Hilfe der Meßgröße und der Trainingsdatenbasis vorausgesagt.

Hierzu wird mit den Meßgrößen $X_1$ eine Zustandsraumrekonstruktion nach obiger Gleichung durchgeführt. Deren Ergebnis wird mit $Z_R$ bezeichnet, um es von den Trainingsdaten $Z_T$ unterscheiden zu können. Die Trajektorien während der Meßphase werden in $R_R$ dargestellt (Trajektorie 2 mit $Z_R$ in Fig. 1 rechts).

Anschließend werden die nächsten Nachbarn von $Z_R$ im trainierten rekonstruierten Phasenraum $R_T$ gesucht und man erhält die Übertragungsfunktion $\Psi$ vom rekonstruierten Phasenraum $R_R$ zum trainierten rekonstruierten Phasenraum $R_T$. Diese ordnet einem Punkt in $R_R$ dessen nächsten Nachbarn in $R_T$ zu. Weil die genannten Nachbarn Bestandteile der Trainingsdatenbasis sind, sind auch die zugehörigen Werte der zu ermittelnden Systemgröße $X_2$ bekannt.

Um die nicht gemessene Systemgröße möglichst genau bestimmen zu können, wird jedem Trainingsorbit ein Maß zwischen 0 und 1 zugeordnet, welches die Ähnlichkeit des gemessenen Orbit (2) bezüglich des betreffenden Trainingsorbits angibt. Hierfür werden Zugehörigkeitsfunktionen gemäß der Fuzzy-Logik verwendet und bei der Interpolation berücksichtigt. Die Zugehörigkeit eines Meßdatensatzes l ergibt sich z. B. zu

$$u_l = \frac{\left(\frac{1}{\chi_l}\right)^{\frac{1}{q-1}}}{\sum_{v=1}^{L}\left(\frac{1}{\chi_v}\right)^{\frac{1}{q-1}}} \; , \; q \in \{1, 2, ...\}$$

wobei die Größen $\chi_l$ und $\chi_v$ globale Abstandsmaße sind. $\chi_l$ stellt den globalen Abstand eines Trainingsorbits l in $R_T$ zum aktuellen Meßorbit in $R_R$ dar. Die Variable q wird hier q = 2 gewählt und stellt die Zugehörigkeitsschärfe ein. Für q gegen 1 wird dem Datensatz mit dem kleinsten Fehler die Zugehörigkeit 1 zugewiesen, während die übrigen Datensätze mit einer Zugehörigkeit von 0 belegt werden. Bei einer Erhöhung von q werden auch weitere Datensätze mit einem Zugehörigkeitswert zwischen 0 und 1 gewichtet und entsprechend berücksichtigt.

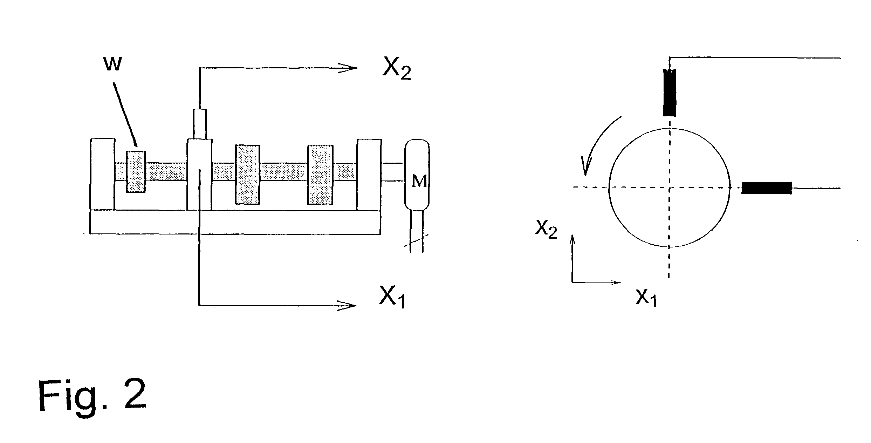

Die Fig. 2 zeigt ein Anwendungsbeispiel anhand eines Meßaufbaus zur Wellenbahnbestimmung. Hierbei wird an einer durch einen Motor M angetriebenen Welle W in der Trainingsphase sowohl die vertikale $X_1$, als auch die horizontale Koordinate $X_2$ mittels geeigneter und an sich bekannter Meßinstrumente aufgenommen. Dabei werden wie in nachstehender Tabelle angegeben 6 Trainingsdatensätze angelegt.

Tabelle 1:

| Datensätze der Trainingsdatenbasis | | |
|---|---|---|
| Datensatz | Drehzahl [min$^{-1}$] | Einbettungszeit [Vielfache von $t_S$] |
| 1 | 600 | 80 |
| 2 | 1000 | 40 |
| 3 | 1600 | 25 |
| 4 | 1973 | 19 |
| 5 | 2575 | 14 |
| 6 | 3233 | 12 |

Die Trainingsdatensätze enthalten jeweils 1024 Datenpunkte der Werte $(X_1, X_2)$ und wurde mit einer Abtastfrequenz von $t_S$ = 2500 Hz bei den in Tabelle 1 aufgeführten verschiedenen Motordrehzahlen aufgenommen. Anschließend wurde aus der $X_1$-Koordinate eine Phasenraumrekonstruktion mit m = 3 vorgenommen. In der eigentlichen Meßphase wird die Welle mit einer Drehzahl von 1480 U/min angetrieben und es wird die Koordinate $X_2$ aus der Koordinate $X_1$ rückgewonnen. Als Einbettungszeit wurde jeweils der in der Tabelle 1 angegebene Wert gewählt. Pro Trainingsdatensatz wurde nur ein nächster Nachbar berücksichtigt. Die wichtenden Zugehörigkeitsfunktionen u zur gemessenen Dynamik sind in nachstehender Tabelle angegeben.

Tabelle 2:

| Zugehörigkeit der Messung zu den Trainingsdatensätzen aus der Datenbasis | | |
|---|---|---|
| Datensatz | Drehzahl [min$^{-1}$] | Zugehörigkeit |
| 1 | 600 | 0.151 |
| 2 | 1000 | 0.198 |
| 3 | 1600 | 0.280 |
| 4 | 1973 | 0.111 |
| 5 | 2575 | 0.126 |
| 6 | 3233 | 0.132 |

Der Trainingsdatensatz mit der höchsten Zugehörigkeit ist verständlicherweise der Datensatz Nr. 3 (Drehzahl 1600 U/min).

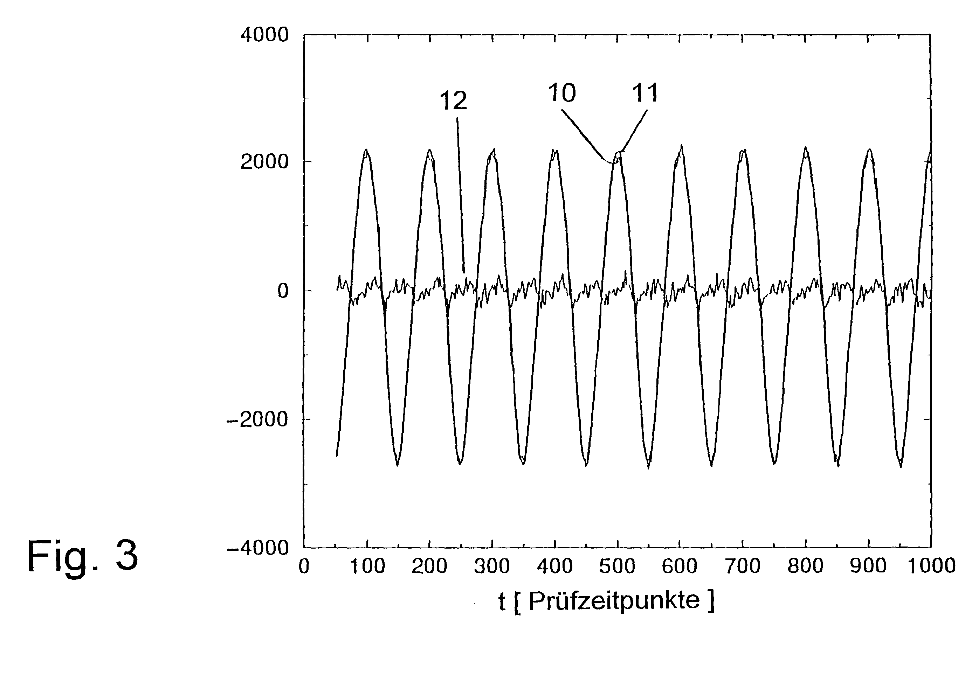

In Fig. 3 ist die gemessene Vertikalkoordinate $X_2$ (Kurve 10) über der rückgewonnenen vertikalen Koordinate $X_2$ (Kurve 11), die durch die gemessene horizontale Koordinate $X_1$ ermittelt wurde, dargestellt. Als Schwingung mit der sehr kleinen Amplitude (12) erkennt man den Fehler zwischen der gemessenen und der rückgewonnenen Koordinate.

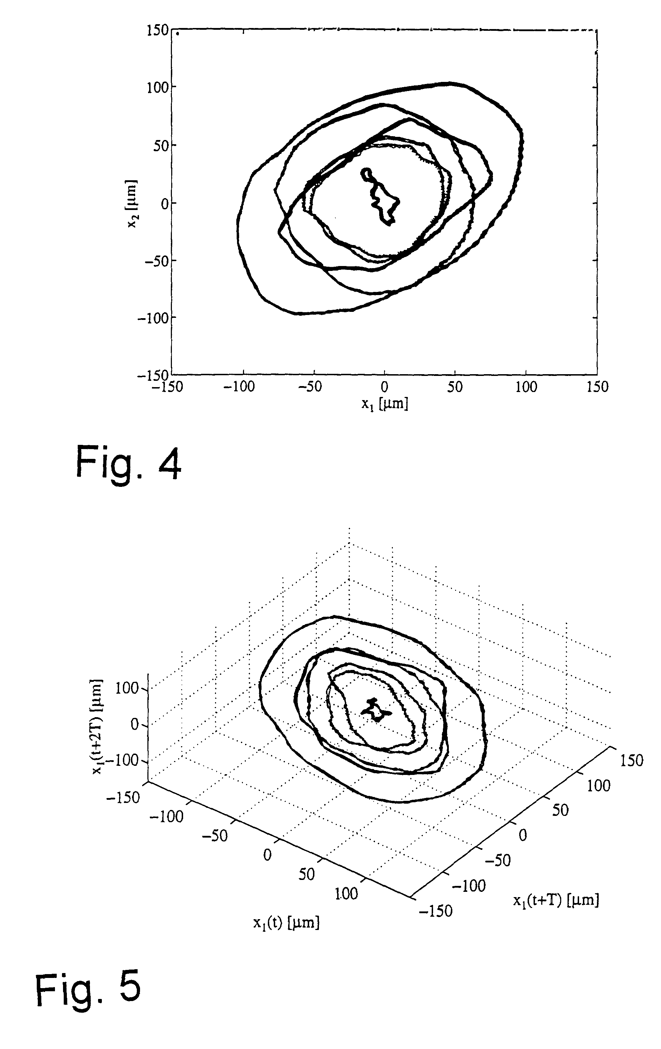

Fig. 4 stellt die gemessenen Wellenbahnen der Trainingsdatenbasis im $X_1$ / $X_2$-Diagramm dar. Man erkennt sechs im wesentlichen ineinander liegende unterschiedlich große Bewegungsbahnen eines Punktes der Welle W aus Fig. 2. Jede einzelne Wellenbahn wurde aus 1024 Meßpunkten generiert.

Fig. 5 zeigt eine Phasenraumrekonstruktion der $X_1$-Koordinate mittels gemessener $X_2$-Koordinate unter Verwendung der Trainingsdatenbasis. Die Phasenraumrekonstruktion der $X_1$-Koordinate von Wellenbahnen aus der Trainingsdatenbasis erfolgte mit einer Einbettungsdimension m=3, wobei der Darstellungsraum durch die Achsen $X_1$ (t), den $X_1$-Wert zur Zeit t, dem $X_1$-Wert zum Zeitpunkt t + Zeitverzögerung (oder Einbettungszeit) T, Achse $X_1$ (t+T) sowie der Achse $X_1$ (t+2T), d. h. zweifache Zeitverzögerung, gebildet ist. Auch hier sind deutlich sechs ineinander liegende Bahnen erkennbar, die offensichtlich den gemessenen Wellenbahnen gemäß Fig. 4 sehr ähnlich sind.

Es sei abschließend darauf hingewiesen, daß die Erfindung in keiner Weise auf das oben geschilderte Ausführungsbeispiel der Maschinenüberwachung eingeschränkt ist, sondern daß mit dem erfindungsgemäßen Vefahren auch ganz andere physikalische Größen auf anderen technischen Anwendungsgebieten bestimmt werden können. So wäre dies beispielsweise bei der Motorenprüfung die Bestimmung von Drehmomenten, Drücken, Ölviskositäten und so weiter aus einer anderen zu messenden Größe. Ein anderes Anwendungsbeispiel ist die Bestimmung der Zusammensetzung und des Mischungsverhältnisses unterschiedlicher Materialien in einem Mischer durch Messung von beispielsweise Schwingungen oder Stromaufnahme des Antriebsmotores. Generell wird die Hauptanwendung der Erfindung in Diagnoseeinrichtungen sein, bei welchen die interessierenden Systemgrößen nicht mit vertretbarem Aufwand direkt ermittelt werden können.

## Patentansprüche

1. Verfahren zur Gewinnung des Wertes mindestens einer nichtgemessenen Systemgröße eines dynamischen, insbesondere nichtlinearen Systems, mittels mindestens einer Meßgröße, wobei in einer Trainingsphase bei einer geeigneten Anzahl von Betriebszuständen unterschiedlicher Systemdynamik die Meßgröße und die Systemgröße gemessen und im Phasenraum (phi) zugeordnet werden, in einem weiteren Schritt nur die Meßgröße nach dem Takens-Verfahren im rekonstruierten Phasenraum ($phi^{-1}$) dargestellt wird, **dadurch gekennzeichnet, daß** anhand von Meßgröße, Systemgröße und der der Meßgröße zugeordneten Phase die Umkehrabbildung aus dem rekonstruierten Phasenraum ($phi^{-1}$) in den Zustandsraum des Systems als Punktabbildung bestimmt und abgespeichert wird, und daß in der Meßphase nur die Meßgröße ermittelt wird, diese im rekonstruierten Phasenraum dargestellt wird, und daß die jeweils nächsten Nachbarn dieser Darstellung in gemäß der genannten Phasenraumrekonstruktion bestimmten "trainierten Dynamiken" ermittelt werden und zwischen den diesen Nachbarn über besagte Umkehrabbildung zugeordneten Werten der Systemgröße inter- oder extrapoliert wird, wobei Gegenstand der Interoder Extrapolation die Abtastung der Umkehrfunktion $phi^{-1}$ ist, die Paare aus Meßgröße und rekonstruierter Phase auf die Systemgröße abbildet, und wobei die trainierten Dynamiken den jeweils betrachteten Betriebszuständen unterschiedlicher Systemdynamiken entsprechen und wobei mittels dieser inter- oder extrapolierten Dynamik der Wert der zu schätzenden Systemgröße aus dem Phasenraum rückgewonnen wird.

2. Verfahren nach Anspruch 1, **dadurch gekennzeichnet, daß** die Inter- oder Extrapolation mittels aller nächsten trainierten Nachbardynamiken im rekonstruierten Phasenraum erfolgt.

3. Verfahren nach Anspruch 1, **dadurch gekennzeichnet, daß** die trainierten Dynamiken über Zugehörigkeitsfunktionen zur gemessenen Dynamik gewichtet werden, und daß die Interoder Extrapolationen mittels dieser gewichteten Dynamiken erfolgt.

## Claims

1. Method of acquiring the value of at least one non-measured system quantity of a dynamic, in particular non-linear system, by means of at least one measured quantity, wherein in a training phase given a suitable number of operating states of differing system dynamics the measured quantity and the system quantity are measured and assigned in the phase space (phi), in a further step only the measured quantity is represented in accordance with the Takens method in the reconstructed phase space ($phi^{-1}$), **characterized in that** from measured quantity, system quantity and the phase assigned to the measured quantity the inverse representation from the reconstructed phase space ($phi^{-1}$) into the state space of the system is determined as a point representation and stored, and that in the measuring phase only the measured quantity is determined, the latter is represented in the reconstructed phase space, and that the, in each case, closest neighbours of said representation are determined in trained dynamics determined in accordance with the said phase space reconstruction and inter- or extrapolation is effected between the system quantity values assigned to said neighbours via said inverse representation, wherein the object of the inter- or extrapolation item is the sample of the inverse function $phi^{-1}$, which maps pairs of measuring quantity and reconstructed phase onto the system quantity, and wherein the trained dynamics correspond to the respectively considered operating states of differing system dynamics and wherein by means of said inter- or extrapolated dynamics the value of the system quantity to be estimated is regained from the phase space.

2. Method according to claim 1, **characterized in that** the inter- or extrapolation is effected by means of all of the closest trained neighbouring dynamics in the reconstructed phase space.

3. Method according to claim 1, **characterized in that** the trained dynamics are weighted by means of functions of association to the measured dynamics, and that the inter- or extrapolation is effected by means of said weighted dynamics.

**Revendications**

1. Procédé d'acquisition de la valeur d'au moins une grandeur non mesurée d'un système dynamique, en particulier non linéaire, au moyen d'au moins une grandeur de mesure, au cours d'une phase d'entraînement et avec un nombre approprié d'états de fonctionnement dont la dynamique du système est différente, la grandeur de mesure et la grandeur du système étant mesurées et corrélées dans l'espace de phase (phi), au cours d'une autre étape, seule la grandeur de mesure étant représentée, selon le procédé Taken dans l'espace de phase reconstruit (phi$^{-1}$), **caractérisé en ce qu'**on détermine, à l'aide de la grandeur de mesure, de la grandeur du système et de la phase associée à la grandeur de mesure, la reproduction inverse depuis l'espace de phase reconstruit (phi$^{-1}$) dans l'espace d'état du système, en tant que reproduction ponctuelle et on la mémorise, et **en ce qu'**au cours de la phase de mesure on détermine seulement la grandeur de mesure, on représente celle-ci dans l'espace de phase reconstruit, et **en ce qu'**on détermine chacun des voisins suivants de cette représentation selon la reconstruction de l'espace de phase précitée, dans des dynamiques entraînées déterminées, et on interpole ou extrapole, entre les valeurs de la grandeur du système, associées à ces voisins sur ladite reproduction inverse, l'objet de l'interpolation ou de l'extrapolation étant le balayage de la fonction inverse (phi$^{-1}$) qui reproduit les paires constituées de la grandeur de mesure et de la phase reconstruite sur la grandeur du système, les dynamiques entraînées correspondant aux états de fonctionnement considérés dans chaque cas aux dynamiques de système différentes et la valeur de la grandeur des système à estimer étant récupérée, au moyen de cette dynamique interpolée ou extrapolée, depuis l'espace de phase.

2. Procédé selon la revendication 1, **caractérisé en ce que** l'interpolation ou l'extrapolation s'effectue au moyen de toutes les dynamiques voisines entraînées suivantes dans l'espace de phase reconstruit.

3. Procédé selon la revendication 1, **caractérisé en ce que** les dynamiques entraînées sont pondérées par l'intermédiaire de fonctions d'appartenance à la dynamique mesurée, et **en ce que** les interpolations ou extrapolations s'effectuent au moyen de ces dynamiques pondérées.

Fig. 1

Fig. 2

Fig. 3

Fig. 4

Fig. 5